Europäisches Patentamt

European Patent Office

Office européen des brevets

(11) Publication number: **0 484 734 A2**

# EUROPEAN PATENT APPLICATION

(21) Application number: **91118017.2**

(22) Date of filing: **23.10.91**

(51) Int. Cl.⁵: **F16C 32/00**

(30) Priority: **05.11.90 US 608995**

(43) Date of publication of application:
**13.05.92 Bulletin 92/20**

(84) Designated Contracting States:
**AT BE CH DE DK ES FR GB GR IT LI LU NL SE**

(71) Applicant: **INTERSONICS INCORPORATED**
**3453 Commercial**
**Northbrook, Illinois 60062(US)**

(72) Inventor: **Rey, Charles A.**
**1332 Woodland Lane**
**Riverwoods, IL 60015(US)**
Inventor: **Merkley, Dennis R.**
**3847 Galesburg Court**
**Arlington Heights, IL 60004(US)**

(74) Representative: **Flosdorff, Jürgen, Dr.**
**Postfach 1454**
**W-8100 Garmisch-Partenkirchen(DE)**

(54) **Aero-acoustic levitation device and method.**

(57) The levitation device for suspending an object without contact under the influence of gravity without contact with a solid surface is characterized by the combination of a gas levitator which directs a concentrated flow of gas along an axis upwardly to lift a majority of the weight of the specimen, and an acoustic device which exerts an acoustic positioning force on the object to restrain movement of the specimen away from said axis. Using gas flow to provide upwards lift decreases the degree of acoustic force required to hold the object in a given position. The problems of generating and dealing with sound at very high pressure levels are greatly reduced. Medium to high density objects are levitated in the earth's gravity without the problems and limitations associated with the use of single prior methods alone. Also, stable gas levitation of liquids is accomplished, which has been very difficult or impossible to achieve in the past.

Fig. 2

## Background of the Invention

Various types of acoustic and other non-contact levitation techniques are well known. Acoustic levitation using tuned chambers are described in U.S. patent no. 3,882,732 and 4,054,181. Acoustic levitation in which a beam of sound is directed toward a small reflector is described in U.S. patent no. 4,284,403. U.S. Patent No. 5,036,944 describes a method and apparatus for acoustic levitation in which an object is suspended between one or more pairs of opposed sound sources driven at the same frequency.

Acoustic levitation techniques on earth, are less effective because of the presence of gravity, especially if the levitated objects have a high density. The acoustical forces are relatively weak, and production of the necessary high sound pressure levels is difficult. In addition, the generation of high intensity sound results in sonic distortions which are highly detrimental to levitation. The problems become intensified if the object is heated and cooled.

The use of a gas stream to levitate an object known, and the lifting forces are greater than those available with acoustic techniques. In the past, however, this technique has been limited to lifting of solid, spherical objects. In the case of liquids or objects which are melted while being levitated, the object flattens or otherwise changes shape, and the material is ejected from the gas stream.

## Summary of the Invention

The present invention is characterized by of a levitator in which a particular combination of aerodynamics and acoustic techniques are used. A stream of gas is directed from beneath the object to provide the primary upward or vertical lifting force against the weight of the object in gravity. Acoustic forces are employed to hold the object in position with sufficient force to overcome instabilities caused by the gas stream. The acoustic device may also be used to provide horizontal positioning, and to control the shape, spin, or other movement of the object. Other important features will be described in the following description.

## The Drawings

Figure 1 is a schematic view of an acoustic levitator which may be used in connection with the present invention.

Figure 2 is a schematic view of one version of the aero-acoustic levitator of the present invention.

Figure 3 is a schematic view of another version of the levitator of the present invention.

Figure 4 is a schematic view of a control system which may be employed with the present invention.

## Detailed Description

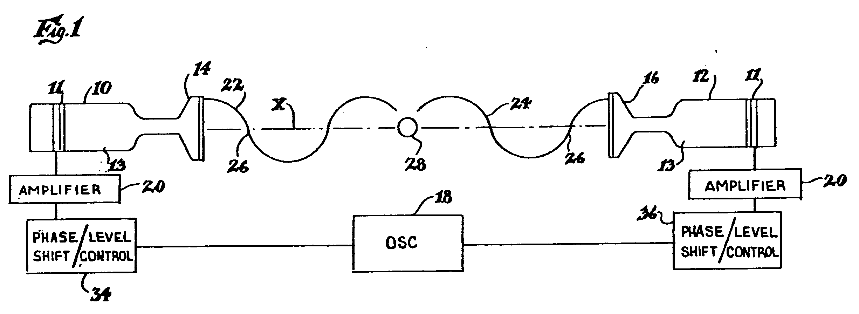

Figure 1 illustrates a pair of opposed sound sources 10 and 12 having respective sound radiating surfaces 14 and 16 which generate sound toward each other substantially along a common axis x, as more completely described in U.S. Patent No. 5,036,944. The sound sources 10 and 12 may be of the solid piston type containing electro-mechanical driver, such as piezoelectric or magnetostrictive, or a conventional voice coil.

The sound sources 14 and 16 provide a column of intense sound in opposite directions along the axis x. The sound sources are connected to a common oscillator 18 and amplifiers 20 to produce sound at the same frequency. Each sound source includes a plurality of piezoelectric wafers 11 receiving a signal from the oscillator 18 and held in compression with a cylindrical rod or piston 13 secured to the concave radiators 14 and 16. The wafers expand and contract or vibrate at high levels of force to cause vibration of the rod 13 and radiator 14 or 16.

When the sound sources 10 and 12 are driven at the same frequency, an interference wave pattern is established between the interacting beams. Figure 1 shows a sound wave 22 from source 10 and a sound wave of the same wavelength 24 from source 12, which, at certain points along the axis x, interfere and reinforce each other and provide nodes 26 of low acoustic pressure. The nodes 26 appear at each half wavelength and define energy wells in which solid or liquid objects 28 may be levitated. The nodes or energy wells 26 provide resultant forces which hold or contain the object 28 both axially and radially.

Phase shift and level controls 34 and 36 are connected to either one or both of the amplifiers in order to change the phase of one sound source relative to the other. A common control 38 may be adjusted to provide a positive, negative or zero change between the sound sources. This causes a corresponding change in the location of the energy wells 26 along the axis x and movement of the object.

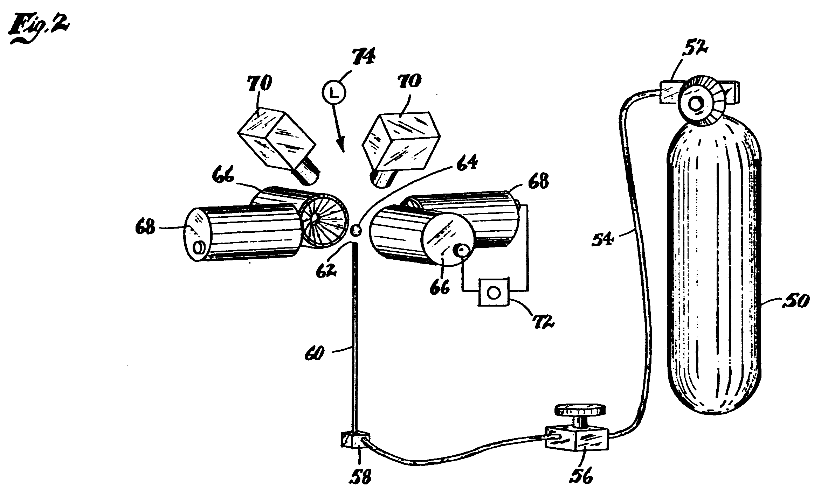

Figure 2 illustrates the aero-acoustic levitator of the present invention. A source of pressurized gas, such as a pressure tank 50 having a pressure regulator 52 is connected to an outlet line 54 having a needle valve 56. A controlled volume of gas is passed through an appropriately sized orifice, which is in turn connected to an upright delivery tube 60 having an outlet 62.

The gas exits from the outlet 62 of the tube, which is directed toward a levitation zone in which an object 64 is to be suspended or levitated. The object may be composed of an electrically conductive or non-conductive material. Generally, it is preferable to direct the gas flow along a vertical axis, although it is possible to levitate objects by one or more gas streams or jets which are disposed at an angle to the vertical axis. The velocity of the gas stream may be adjusted to attain the desired degree of lift and to adjust the distance from the nozzle.

Either a laminar or jet gas flow may be employed. In the case of laminar flow, the outlet 62 has a diameter larger than the diameter of the object, and the flow provides an upward lift component with little or no sideways restraining force. In the case of a jet, the nozzle has a diameter less than the levitated object and the flow provides an upward lift component as well as some degree of lateral stability due to the flow of gas around the object.

In order to maintain the object in a stable position, especially at right angles to the axis of the gas levitator, an acoustic positioning is employed, preferably the device shown in Figure 1. Two pairs of opposed sound sources 66 and 68 may be directed toward the levitation zone or the suspended object. The sound sources are arranged at right angles to each other and are equally spaced apart, with their axes of radiation being in a common plane. The axes of radiation are in a horizontal plane to produce strong lateral positioning forces. Video scanners or other sensors 70, may be directed toward the object to monitor the specimen and enable a variety of functions. These include position, spin, temperature, movement, phase change, shape or other properties. In addition, a phase-shift control 72 may be employed to impart a torque on the object to minimize or control spinning of the object, or to produce spin. The acoustic field exerts a uniform retaining force on the object, and results in a more stable shape for levitated liquids. A heat source, such as a laser 74 or other known heater may be employed to heat and melt the object.

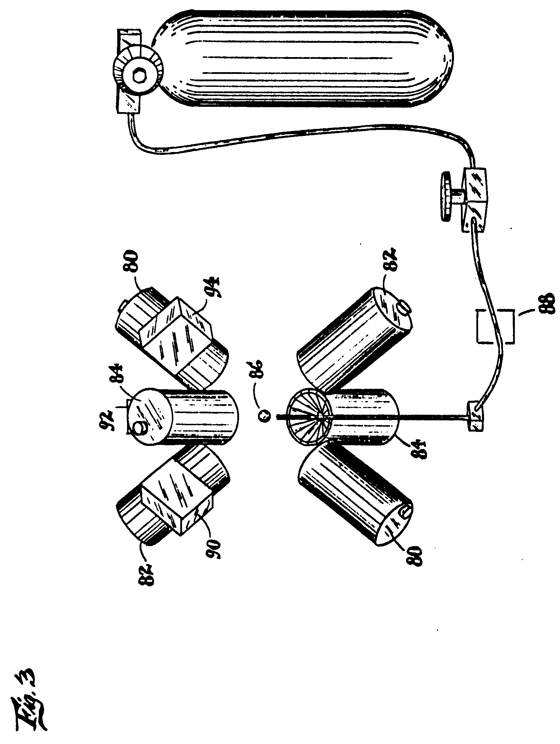

Figure 3 shows a gas levitator in combination with a three axis acoustic positioning device. The opposed pairs of sound sources are illustrated at 80, 82 and 84, which are arranged along the orthoginal axes with the specimen 86 at the center. This arrangement provides a more uniform distribution of acoustic forces around the object 86 and also, provide some degree of lift and restraint along to the vertical axis. The majority of the weight of the object, however, is preferably carried by the gas flow.

A heater 88 may be placed in the gas supply line. Preheating of the gas improves efficiency and stability. Temperatures in excess of 100 to 150 and up to 600 degrees C and higher are beneficial.

Using air flow to provide upward lift decreases, the degree of acoustic force required to hold the object in a given position. The problems of generating and dealing with sound at very high pressure levels are greatly reduced. Medium to high density objects are levitated in the earth's gravity without the problems and limitations associated with the use of single prior methods alone. Also, stable gas levitation of liquids is accomplished, which has been very difficult or impossible to achieve in the past.

Other known types of acoustic positioning devices may be employed, in lieu of the device shown, including tuned cavities or other techniques employing standing waves or one or more reflective surfaces for a sound source.

The use of the steady gas flow around the object during heating and cooling is separately beneficial. Heating of the specimen may cause uneven heating of the gas around the specimen. The use of a positive gas flow around the object serves to create a more uniform temperature environment around the specimen and allows for more efficient acoustic positioning.

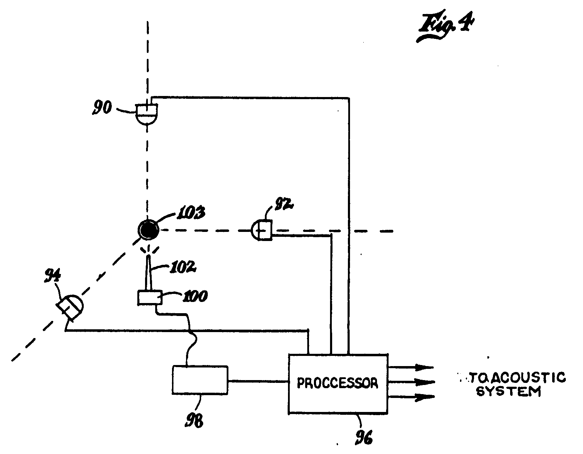

Figure 4 schematically illustrates a control system which includes position sensors 90, 92 and 94 arranged along three orthoginal axes. These sensors are connected to a processor 96 to determine changes of shape or motions of the object.

A separate control 98 connected to an electrical dynamic valve 100 regulates the gas flow rate through the nozzle 102. The control 98 may also provide information to the processor 96. The controls are used to maintain the desired position and shape of the object 103.

Information received from the sensors may be used in a variety of ways. Slow drift of the object along or away from an axis can be corrected by sensing the position of the object, and then adjusting the relative phase or amplitude of appropriate sound sources to return the object to the desired position.

If a levitated object is melted, the object tends to assume a flat shape. In such an event, the intensity of the sound sources may be increased to provide increased constraint. In addition, the gas flow rate may be dynamically reduced to compensate for the altered specimen shape, to maintain the object in the desired position.

The present invention has been successfully employed in the containerless processing of dense materials at earth gravity and high temperatures. For example, specimens of Aluminum Oxide ($Al_2O_3$) have been stably levitated, heated and melted up to a temperatures up to 2400°C, or about 350° above the melting point. Also, liquid Aluminum Oxide has been undercooled down to about 1725°C or about 325°C below the melting point before solidification.

## Claims

1. A levitation device for suspending an object without contact under the influence of gravity without contact with a solid surface, characterized by the combination of a gas levitator which directs a concentrated flow of gas along an axis upwardly to lift a majority of the weight of the specimen, and an acoustic device which exerts an acoustic positioning force on the object to restrain movement of the specimen away from said axis.

2. The device according to Claim 1, characterized in that the acoustic device is a pair of interfering sound sources directed at said object or an angle relative to said axis.

3. The device of Claim 2, characterized in that the second sources are opposed and operate at the same frequency.

4. The device of Claim 2, characterized in that the sound sources have axes of radiation in a common plane.

5. The device of Claim 2, characterized in that the sound sources have axes of radiation in a plurality of planes.

6. The device of Claim 2, characterized in that three sets of opposed sound sources are employed, each having a separate common axis of radiation, with the axes of the three sets being arranged orthoginally.

7. The device of Claim 1, further characterized by a means for heating the gas before contact with the specimen.

8. The device of Claim 1, further characterized in that a detector is employed for detecting the position of the specimen.

9. The device of Claim 1, characterized in that the acoustic levitatior includes a means for applying a torque to the specimen.

10. The device of Claim 1 characterized in that the acoustic device includes the acoustic means for changing the position of the specimen.

11. The device of Claim 1 additionally comprising means for heating the object.

12. A method for stable levitation of a specimen under the influence of gravity characterized by the steps of applying an upward stream of gas on the specimen sufficient to provide a lifting force for the specimen, and applying acoustic forces to the specimen to position the object in the stream of ga.

13. The method according to Claim 12 further characterized in that the specimen is heated and melted while being levitated.

14. The method according to Claims 12 or 13 characterized in that the rate of flow of gas on the specimen is changed while the object is being heated and melted.

15. The method of Claims 12, 13 and 14 characterized in that the acoustic forces are additionally employed to control the spin or other movement of the specimen.

16. The method according to Claims 13 or 14 characterized in that the acoustic forces are additionally employed to control the shape of the melted specimen.

*Fig.1*

EP 0 484 734 A2

Fig. 2

Fig. 3

EP 0 484 734 A2

Fig. 4